# FASCICULE DE BREVET EUROPEEN

(11) **EP 3 507 068 B1**
(45) Date de publication et mention de la délivrance du brevet: **01.12.2021**
(21) Numéro de dépôt: 17761077.1
(22) Date de dépôt: 01.09.2017
(51) Int. Cl.: B29B 11/16, B29K 307/04

(54) **STRUCTURE FIBREUSE ET PRÉFORME 3D POUR PIÈCE COMPOSITE**
FASERSTRUKTUR UND 3D-VORFORM FÜR EIN VERBUNDTEIL
FIBROUS STRUCTURE AND 3D PREFORM FOR A COMPOSITE PART

(30) Priorité: 02.09.2016 FR 1658181
(43) Date de publication de la demande: 10.07.2019
(73) Titulaire: Porcher Industries, 38300 Badinières (FR)
(72) Inventeur: RISICATO, Jean Vincent, 38140 Beaucroissant (FR); VARANIAC, Patrick, 38300 Tramole (FR); PERRIN, Hubert, 38690 Flacheres (FR); DUSSENNE, William, 38490 Les Abrets (FR)
(74) Mandataire: Lavoix
(86) Numéro de dépôt international: PCT/EP2017/071945
(87) Numéro de publication internationale: WO 2018/041990

(56) Documents cités:
- DE-A1-102014 213 320
- US-A1- 2014 175 709
- CAMPBELL F C ED - CAMPBELL FLAKE C: "Manufacturing processes for advanced composites", 1 janvier 2004 (2004-01-01), MANUFACTURING PROCESSES FOR ADVANCED COMPOSITES, ELSEVIER ADVANCED TECHNOLOGY, OXFORD, GB, PAGE(S) 304 - 356, XP002580602, ISBN: 978-1-85617-415-2 alinéas [09.2], [09.3], [09.4], [9.13] figure 4

## Description

La présente invention est relative à une structure fibreuse et une préforme 3D (3-dimensions) obtenu à partir de cette structure fibreuse, destinée à former la base d'une pièce composite, notamment à destination des industries de haute technologie, aéronautique, aérospatiale et automobile. Elle concerne aussi un procédé de fabrication.

Les matériaux composites à renfort textile ou fibreux sont formés d'au moins deux éléments : la matrice et le renfort. La matrice, qui enrobe et rigidifie le renfort, permet de lui transmettre les sollicitations mécaniques via leur interface. La matrice peut également servir à protéger le matériau fibreux d'agressions liées à l'environnement d'utilisation (chimique, thermique, UV...). Elle peut être organique ou non. Les matrices organiques se dissocient en deux familles, thermodurcissables (TD) et thermoplastiques (TP).

Le second constituant est le renfort qui doit procurer les propriétés mécaniques du matériau final en absorbant les sollicitations transmises par la matrice. Les matières les plus utilisées dans les applications de renforts de composites sont le verre, l'aramide et le carbone. On distingue plusieurs familles de matériaux fibreux pour le renforcement de composites : les produits pré-imprégnés qui emportent la quantité de résine pour l'obtention de la pièce composite, les co-mêlés qui combinent fibres de renfort et fibres de résine, et les produits secs qui nous intéressent ici.

Pour réaliser un matériau composite il faut donc associer et mettre en forme les le renfort et la matrice. Parmi les procédés de fabrication employés pour les composites, les procédés de moulage par transfert de résine dits « Liquid Composite Molding » (LCM) présentent un excellent potentiel pour produire en grande série. L'infiltration de résine par injection en moule fermé et celle par infusion en moule ouvert sont les deux grandes familles constituant la gamme des procédés LCM. Dans le mode de fabrication à « moule fermé » le renfort fibreux est mis en place dans un moule qui reste fermé pendant tout le procédé d'obtention du composite. Il s'agit du procédé RTM et ses dérivés. Le « moule ouvert » est spécifique des technologies à demi-moule ou à filière : moulage au contact, enroulement filamentaire, dépose de pré-imprégnés ou encore la pultrusion.

Dans la première famille, on y retrouve le moulage par transfert de résine («Resin Transfer Molding» ou RTM), le moulage par transfert de résine «light» («Resin Transfer Molding Light» ou RTM-Light), le moulage par transfert de résine sous vide («Vacuum Assisted Resin Transfer Molding» ou VARTM) et le moulage par compression («Compression Resin Transfer Molding» ou CRTM). Le RTM et ses dérivés utilisent la gravité, le déplacement d'un piston ou le différentiel de pression créé par une pompe pour «pousser» la résine dans la cavité via le port d'injection. On parle d'infiltration de résine. Le renfort sec peut préalablement être mis en forme lors d'une étape de préformage, par pulvérisation d'une faible quantité de résine, puis placé dans un moule fermé et dans lequel une résine liquide est injectée, en un ou plusieurs points, en appliquant un gradient de pression. Ensuite, la résine (thermoplastique ou thermodurcissable) réticule ou durcit dans le moule avec l'élévation de la température pour former la matrice.

Dans la deuxième famille de procédés, on fait le vide dans la cavité du moule et la résine est infusée dans la pièce sous l'effet de la pression atmosphérique («Vacuum Assisted Resin Infusion» ou VARI). L'infusion peut aussi être assistée par un réseau de canaux préférentiels actionnés à distance («FAST Remotely Actuated Channeling» ou FASTRAC), par l'utilisation d'un milieu drainant («Liquid Resin Infusion» ou LRI), souvent appelé SCRIMP («Seemann Composites Resin Infusion Molding Process») dans le domaine nautique et par l'infusion de résine disposée en films intercalés entre les couches du renfort («Resin Film Infusion» ou RFI). On parle d'infusion de résine.

Les structures textiles tissées souffrent d'une épaisseur faible face aux dimensions de la pièce à réaliser. Il faut donc empiler les couches les unes sur les autres. Pour lier ces couches entre elles, des structures interlocks ont été développées. Puis ont été développées directement des structures textiles ayant l'épaisseur de la pièce finale, la structure étant tissée en une seule pièce par tissage multicouche entre une pluralité de couches de fils de chaîne et une pluralité de couches de fils de trame.

EP 424 216 décrit la production d'un matériau tridimensionnel à partir de fils préalablement associés à une résine thermoplastique. Soit les fils sont associés à de la résine par un mélange intime dans les fils de fibres de renfort et de résine présentée sous forme de fibres, soit par enrobage de fils de renfort par une gaine de résine. Le tissu 3D est réalisé avec des fils composites à 60% de verre et 40% de PEEK, le tissu comprenant la totalité de la résine nécessaire à la consolidation de la pièce. Ce document concerne donc les produits pré-imprégnés, et pas l'emploi de renforts secs selon l'invention.

WO 2006/136755, WO 2013/088035 et FR 2902503 décrivent en revanche la réalisation de pièces en matériau composite par tissage tridimensionnel à partir de fils de chaîne et de trame, destinés à être ensuite densifiées par une résine matrice transférée, injectée ou infiltrée dans la structure fibreuse. FR 2 939 153 décrit la réalisation d'une structure fibreuse à épaisseur évolutive par tissage tridimensionnel.

On connaît donc une variété de structures fibreuses tridimensionnelles (3D) utilisables pour former des préformes qui seront ensuite consolidées par RTM, injection ou infusion pour aboutir à une pièce composite consolidée. Or, les pièces composites consolidées ont souvent des formes qui ne sont pas planes, peuvent avoir même des formes complexes, avec des parties courbes ou dans des plans différents, et/ou des zones d'épaisseurs différentes. Parfois aussi, il est nécessaire de déployer la structure fibreuse 3D avant de la placer dans le moule. Une structure fibreuse est en outre susceptible de se tasser sur elle-même. Il en résulte des difficultés de mise en œuvre ou de déformation de la forme déployée de la préforme. La pression appliquée pour faire pénétrer la résine peut provoquer des glissements entre couches de fils ou des déformations de structure qui nuisent aux performances mécaniques de la pièce finale.

Une difficulté importante est liée au fait que toute solution permettant de résoudre ces inconvénients ne doit pas gêner l'introduction de la résine au cœur de la préforme lors de la densification en moule pour former la pièce composite consolidée, ni provoquer le déplacement incontrôlé de parties ou couches du renfort.

Cette problématique de manipuler des préformes, notamment d'épaisseur importante ou 3D, ou d'en conserver la structure en amont du positionnement dans le moule et lors de l'injection est donc bien réelle. Toutefois les solutions proposées jusqu'ici ne sont pas suffisamment efficaces, souples et applicables quel que soit le matériau de la préforme. Comme le rappelle DE 10 2014 213320, les préformes peuvent être liées par un liant que l'on pulvérise sous forme pulvérulente sur la préforme, mais cette solution n'apporte un début de solution que sur des faces planes, alors qu'elle ne permet pas d'atteindre les faces verticales, par exemple. Il a donc été proposé dans ce document d'effectuer un poudrage électrostatique de l'ensemble de la préforme formée de fibres de carbone, par nature conductrices. Toutefois, ce procédé n'est pas applicable à des fibres non conductrices, comme le verre. En outre, il manque de souplesse et d'adaptabilité, dans la mesure où l'intégralité de la structure va être potentiellement soumise au poudrage électrostatique, ce qui ne permet pas de définir des zones ne nécessitant pas, ou ne devant pas recevoir, de liant. En outre, si la totalité des fibres conductrices est susceptible d'être soumise à une différence de potentiel, cela ne signifie pas pour autant que de la poudre de liant soit capable d'atteindre en quantité suffisante les couches profondes de fils, ni qu'une répartition dosée du liant soit possible dans toute la structure ou dans des parties sélectionnées.

La présente invention a pour objectif de réaliser une préforme fibreuse tridimensionnelle (3D) de bonne tenue, notamment stabilisée, facilement déplaçable et manipulable, ayant une perméabilité adaptée à la pénétration uniforme à cœur d'un polymère destiné à former une pièce composite avec la préforme, en limitant ou supprimant les déplacements de fils ou fibres sous l'effet de la pénétration du polymère.

Elle a aussi pour objectif de réaliser une structure fibreuse multicouche plane et déployable pour former une préforme 3D complexe.

Elle a aussi pour objectif de proposer un procédé de fabrication d'une telle préforme qui résolve les problèmes des procédés antérieurs comme le poudrage électrostatique. Notamment, le procédé proposé doit pouvoir être appliqué quelle que soit la nature de fils composant la préforme, et/ou permettre de définir des zones ou des couches de fils recevant du liant et des zones ou des couches de fils n'en recevant pas. Le procédé doit aussi pouvoir permettre de contrôler la répartition ou le dosage de liant selon les couches ou zones de la structure. Egalement, ce procédé a pour objectif de permettre un déploiement optimal de la préforme et la fixation de sa configuration déployée, pour conférer à la préforme ainsi obtenue les propriétés définies aux objectifs précités.

L'invention a ainsi pour objet une préforme en structure fibreuse 3D comprenant au moins 3 couches de fils de trame et/ou au moins 3 couches de fils de chaîne, la structure étant tissée en une seule pièce par tissage multicouche entre la pluralité de couches de fils de chaîne et la pluralité de couches de fils de trame. La totalité ou une fraction déterminée des fils de chaîne et/ou des fils de trame portent en surface le polymère thermosensible. Ce polymère représente une masse inférieure ou égale à environ 10%, de préférence d'environ 1 à environ 7%, mieux d'environ 1 à environ 5%, en poids par rapport à la masse totale de la préforme. La répartition des fils portant du polymère et donc la répartition des points d'intersection liés par le polymère sont prédéterminées, non aléatoires.

On peut donc définir la préforme comme comprenant une distribution ou répartition de points d'intersection fils de chaîne et fils de trame liés par du polymère, prédéterminée. Notamment avec des fils uniformément revêtus du polymère, on dispose d'une répartition de points liés qui peut être à 100% ou proche des 100% lorsque tous les fils de chaîne et/ou de trame sont revêtus du polymère, ou qui peut être inférieure à 100%, mais parfaitement définie par rapport à une répartition prédéterminée des fils enduits de polymère. On pourrait alternativement prévoir une répartition inférieure à 100%, par exemple 95%, 90% ou 80%. On pourrait même envisager une répartition inférieure à 40% pour certaines applications.

On peut donc aussi définir la préforme comme comprenant une structure textile dont le tissage a été effectué en utilisant des fils de chaîne et/ou des fils de trame portant en surface le polymère thermosensible (fils pré-enduits de ce polymère), et le passage à la préforme s'est fait par thermoformage à une température supérieure au point de ramollissement du polymère, suivi d'un refroidissement, ce grâce à quoi les fils de chaîne et les fils de trame sont liés à leurs intersection par du polymère là où l'un au moins des fils de chaîne et/ou de trame porte du polymère.

La préforme comporte donc au moins une partie dans laquelle les fils de chaîne et les fils de trame sont liés à leurs intersections par du polymère là où l'un au moins des fils de chaîne et/ou de trame porte du polymère. Le polymère est à l'état durci. La liaison aux points d'intersection est obtenue par ramollissement, puis durcissement du polymère par un chauffage adapté. Dans un mode de réalisation, la préforme comporte au moins une partie dans laquelle les fils de chaîne et les fils de trame sont liés à leurs intersections par du polymère et au moins une partie dans laquelle les fils de chaîne et les fils de trame ne sont pas liés à leurs intersections par du polymère.

Le polymère présent sur les fils est figé, s'il est thermodurcissable, il est durcit, s'il est thermoplastique. Il peut être en dessous de sa température de transition vitreuse. Thermodurcissable ou thermoplastique, le polymère présente une température de ramollissement, qui peut correspondre à sa Tg. Le passage de cette température conduira à un ramollissement réversible permettant, d'une part, la liaison des fils enduits (l'un au moins du fil de chaîne et du fil de trame en contact) à leurs points d'intersection, et, d'autre part, comme on va le voir, de déployer la structure sous sa forme de « préforme ». Le refroidissement en dessous de cette température figera la préforme, prête à être imprégnée de résine, et facilement manipulable.

La préforme peut être plane, courbée, se présenter sous une forme d'au moins deux parties faisant un angle entre elles ou encore elle peut présenter des parties d'épaisseur variable comme cela est décrit dans FR 2 939 153.

La préforme peut aussi avoir une forme issue du déploiement d'une structure fibreuse multicouche plane issue de tissage, cette structure étant par définition plane et ayant l'épaisseur résultant de ce tissage. Cette préforme peut ainsi comprendre une partie creuse ou tubulaire et/ou présenter au moins deux plans, par exemple 2, 3, 4, 5, etc. formant un angle quelconque entre eux, par exemple une structure primaire (dans le plan de la structure fibreuse d'origine) à laquelle se raccorde(nt) 1, 2, 3, 4, 5, etc. parties secondaires ou bras. Comme décrit dans ce qui suit, à l'origine, dans la structure fibreuse, les plans des parties secondaires sont préférentiellement alignés et dans la même direction que les plans de la structure primaire, les parties secondaires étant déployées, de sorte que leurs plans changent d'orientation et sont inclinés par rapport à la structure primaire.

L'invention a aussi pour objet cette structure fibreuse multicouche plane tissée.

Dans un mode de réalisation, la structure fibreuse comprend au moins 3 couches de fils de trame et/ou de chaîne. La structure est tissée en une seule pièce par tissage multicouche entre les couches de fils de chaîne et les couches de fils de trame, si bien que la structure fibreuse est intégralement tissée (c'est-à-dire qu'il n'y a pas deux couches de fils de chaîne ou deux couches de trame voisines qui ne soient pas liées par le fil complémentaire). La structure fibreuse comprend des fils de chaîne et/ou des fils de trame portant en surface un polymère thermosensible. La totalité ou une fraction seulement des fils de chaîne et/ou des fils de trame portent en surface le polymère thermosensible. Ce polymère représente une masse inférieure ou égale à environ 10%, de préférence d'environ 1 à environ 7%, mieux d'environ 1 à environ 5%, en poids par rapport à la masse totale de la préforme. Les intersections entre fils sont libres, en ce sens que le polymère thermosensible n'a pas été activé. La répartition des fils portant du polymère et donc la répartition des points d'intersection concernés par le polymère sont prédéterminées, non aléatoires.

On peut donc définir la structure textile comme comprenant une distribution ou répartition de points d'intersection fils de chaîne et fils de trame revêtus de polymère, prédéterminée. Notamment avec des fils uniformément revêtus du polymère, on dispose d'une répartition de points d'intersection « avec polymère » qui peut être à 100% ou proche des 100% lorsque tous les fils de chaîne et/ou de trame sont revêtus du polymère, ou qui peut être inférieure à 100%, mais parfaitement définie par rapport à une répartition prédéterminée des fils enduits de polymère.

Une telle forme peut être utilisée pour produire une préforme plane, courbe ou présentant au moins deux plans faisant un angle entre eux.

Dans un autre mode de réalisation, la structure fibreuse est apte à être déployée sous la forme de « préforme » non plane dite « complexe », puis figée par thermoformage sous cette forme non plane. Cette structure fibreuse comprend au moins 3 couches de fils de trame et/ou de chaîne. La structure est tissée en une seule pièce par tissage multicouche entre une pluralité de couches de fils de chaîne et une pluralité de couches de fils de trame. Le tissage a été effectué en utilisant une pluralité de fils de chaîne et/ou de fils de trame portant en surface un polymère thermosensible. Ce polymère représente une masse inférieure ou égale à 10%, de préférence d'environ 1 à environ 7%, mieux d'environ 1 à environ 5%, en poids par rapport à la masse totale de la structure fibreuse. Dans ce mode de réalisation, la structure fibreuse comporte au moins une déliaison dans le plan entre deux couches de fils de chaîne ou entre deux couches de fils de trame. Déliaison signifie que deux couches de fils de chaîne ou de trame consécutives ne sont pas liées entre elles sur une certaine surface, mais réunies là où s'interrompt la déliaison. Grâce à cette déliaison, les deux parties séparées peuvent être écartées l'une de l'autre, dans le cadre du déploiement de la préforme.

Dans une forme de réalisation, la structure fibreuse comprend une déliaison s'étendant dans le plan de la structure depuis un bord latéral jusqu'au bord latéral opposé, et interrompue à distance de chacun des deux autres bords latéraux orthogonaux aux précédents. Le déploiement d'une telle structure permet d'obtenir une préforme creuse ou tubulaire.

Dans une forme de réalisation, la structure fibreuse comprend une déliaison s'étendant dans le plan de la structure depuis un bord latéral jusqu'au bord latéral opposé, et jusqu'à un bord latéral orthogonal, mais interrompue à distance du bord opposé au précédent. Le déploiement d'une telle structure permet d'obtenir une préforme ayant au moins deux plans formant un angle quelconque entre eux, par exemple une structure primaire à laquelle se raccorde(nt) 1, 2, 3, 4, 5, etc. parties secondaires ou bras.

Ces deux formes de réalisation peuvent être combinées.

Suivant une modalité de ces différents modes de réalisation, la structure fibreuse comporte au moins une partie dans laquelle les fils de chaîne et/ou les fils de trame sont revêtus de polymère et au moins une partie dans laquelle les fils de chaîne et les fils de trame n'en sont pas revêtus.

Suivant une modalité de ces différents modes de réalisation, la structure fibreuse a une épaisseur homogène sur toute son étendue, cette épaisseur dépendant de facteurs divers présents simultanément, comprenant notamment le nombre de couches de fils de chaîne, le nombre de couches de fils de trame, le type d'armure, le titre des fils de chaîne, le titre des fils de trame.

Suivant une autre modalité de ces différents modes de réalisation, la structure fibreuse a une épaisseur non homogène sur toute son étendue, la variation d'épaisseur étant lié au nombre de couches de fils de chaîne, le nombre de couches de fils de trame, au type d'armure, au titre des fils de chaîne, au titre des fils de trame, des variations de ces critères selon les zones de la structure permettant d'obtenir au moins deux parties d'épaisseurs différentes.

L'invention a aussi pour objet un procédé de fabrication de la structure fibreuse. Le procédé comprend le tissage d'une structure fibreuse en une seule pièce par tissage multicouche entre une pluralité de couches de fils de chaîne et une pluralité de couches de fils de trame. Le tissage est effectué en utilisant une pluralité de fils de chaîne et/ou de fils de trame portant en surface un polymère thermosensible (fils pré-enduits). Ce polymère représente une masse inférieure ou égale à environ 10%, de préférence d'environ 1 à environ 7%, mieux d'environ 1 à environ 5%, en poids par rapport à la masse totale de la préforme. Le polymère, notamment thermoplastique ou thermodurcissable, est thermosensible, ce qui signifie qu'il peut être ramolli par une élévation de température appropriée à la température de ramollissement du polymère, ou un peu au-dessus.

Dans un mode de réalisation, on produit une structure fibreuse d'épaisseur homogène sur toute son étendue, en jouant notamment sur le nombre de couches de fils de chaîne, le nombre de couches de fils de trame, le type d'armure, le titre des fils de chaîne et/ou le titre des fils de trame.

Dans un mode de réalisation, on produit une structure fibreuse d'épaisseur non homogène sur toute son étendue. On introduit la variation d'épaisseur en jouant notamment sur le nombre de couches de fils de chaîne, le nombre de couches de fils de trame, le type d'armure, le titre des fils de chaîne et/ou le titre des fils de trame. On produit ainsi une structure ayant au moins deux parties d'épaisseurs différentes.

Dans un mode de réalisation, on produit une structure fibreuse comportant au moins une déliaison dans le plan entre deux couches de fils de chaîne ou entre deux couches de fils de trame. On introduit cette déliaison en ne liant pas deux couches de fils de chaîne ou de trame consécutives sur une certaine surface. Dans le cas où ce sont deux couches de fils de trame qui ne sont pas liées par des fils de chaîne, en dehors de cette zone de déliaison, le processus de tissage conduit à lier ces couches de fils de trame ensemble par des fils de chaîne. Dans le cas où ce sont deux couches de fils de chaîne qui ne sont pas liées par des fils de trame, en dehors de cette zone de déliaison, le processus de tissage conduit à lier ces couches de fils de chaîne ensemble par des fils de trame. Grâce à cette déliaison, les deux parties séparées peuvent être écartées l'une de l'autre, tout en étant réunie entre elles à la base de la déliaison, dans le cadre du déploiement de la préforme.

Dans une forme de réalisation, on produit une structure fibreuse comprenant une déliaison s'étendant dans le plan de la structure depuis un bord latéral jusqu'au bord latéral opposé, et interrompue à distance de chacun des deux autres bords latéraux orthogonaux aux précédents. Le déploiement d'une telle structure permet d'obtenir une préforme creuse, délimitant par exemple un ou plusieurs espaces parallélépipédiques ou tubulaires.

Dans une forme de réalisation, on produit une structure fibreuse comprenant une déliaison s'étendant dans le plan de la structure depuis un bord latéral jusqu'au bord latéral opposé, et jusqu'à un bord latéral orthogonal, mais interrompue à distance du bord opposé au précédent. Le déploiement d'une telle structure permet d'obtenir une préforme ayant au moins deux plans formant un angle quelconque entre eux, par exemple une structure primaire à laquelle se raccorde(nt) 1, 2, 3, 4, 5, etc. parties secondaires ou bras.

L'invention a aussi pour objet un procédé de production d'une préforme conforme à l'invention. Dans ce procédé, on part d'une structure fibreuse telle que décrit ici, ou l'on produit d'abord une structure fibreuse selon le procédé qui est décrit ici.

Dans une étape suivante, on chauffe la structure fibreuse plane ou déployée à la température de ramollissement du polymère, ou un peu au-dessus. Ensuite, on abaisse la température en dessous de ce point de ramollissement, on obtient le durcissement du polymère, ce grâce à quoi l'on obtient la liaison des fils entre eux aux points de contact où ce polymère est présent. Le polymère est avantageusement choisi pour avoir un point de ramollissement supérieur à la température ambiante (20-25°C).

Dans un mode de réalisation, la structure fibreuse est placée dans un moule ouvert ou fermé pendant cette opération de chauffage, puis refroidissement. Le moule est à la forme de la préforme à laquelle la structure fibreuse doit conduire.

Dans un mode de réalisation, lors du placement dans le moule, on doit former ou déployer la structure fibreuse pour lui donner la forme du moule ou de la préforme. Ce déploiement peut être réalisé dans le cas d'une structure fibreuse comportant une déliaison ou encore en courbant ou pliant simplement une structure fibreuse.

La préforme « rigidifiée » pourra ensuite être placée dans le moule fermé ou ouvert, pour l'infiltration ou l'infusion de la résine destinée à former la matrice du composite. On dit aussi que la résine ou matrice « densifie » la pièce composite.

L'invention a encore pour objet cette pièce en matériau composite comprenant une préforme selon l'invention, densifiée par la matrice.

L'invention a encore pour objet un raidisseur ou cadre, tels que ceux utilisés dans l'industrie aéronautique, aérospatiale et automobile, formé ou comprenant une pièce selon l'invention. Ces pièces en matériaux composites sont utilisées pour rigidifier tout type de carénages, fuselages, nacelles et autres carrosseries.

Sauf indication contraire, les caractéristiques suivantes s'appliquent aux différents objets de l'invention.

Les fils portant en surface ou étant imprégnés d'un polymère thermosensible se présentant sous cette forme avant tissage, ils sont avantageusement associés à ce polymère sur toute leur longueur, y compris à l'interface avec les fils qu'ils croisent et/ou avec les fils parallèles qui sont à leur contact. Comme on le verra plus loin, selon le mode de dépôt du polymère à la surface des fils, le polymère peut former un revêtement continu ou un revêtement irrégulier ou discontinu.

Lorsque des fils sans polymère sont intégrés à la structure, ceux-ci sont entièrement dépourvus de ce polymère sur toute leur longueur, contrairement à ce qui pourrait se passer en cas de pulvérisation de polymère localement sur la structure, ils peuvent simplement être au contact du polymère porté par un fil qui les croise, au point de croisement avec ce fil.

Suivant une modalité, les fils peuvent comprendre du polymère à leur intérieur aussi, c'est-à-dire que du polymère est inséré dans la masse du fil, au contact et entre les filaments qui le constituent. Dans ce cas, cette imprégnation dite à cœur se poursuit de préférence sur toute la longueur du fil.

La préforme est facilement déplaçable et manipulable, et peut être facilement placée dans un moule. Elle ne s'effondre pas sur elle-même comme le ferait la même structure 3D sans polymère aux points de croisement sélectionnés. Ce maintien de la préforme est assuré soit par l'emploi de fils de chaîne et/ou de trame portant du polymère dans l'ensemble de la préforme, soit par l'emploi de fils de chaîne et/ou de trame portant du polymère judicieusement placés aux endroits nécessaires. En outre, avant formation de la préforme, la structure tissée 3D peut être courbée, pliée et/ou déployée, puis la fixation de la préforme à partir de cette structure formée, peut être réalisée par chauffage approprié, puis refroidissement. Ceci peut se faire éventuellement dans un moule ou tout autre type d'outillage adapté.

Après tissage donc, on déploie ou l'on garde déployée la structure fibreuse et on la soumet à ce chauffage, permettant de thermoformer la structure ou la ou les parties de celle-ci comportant des fils portant le polymère en surface, c'est-à-dire là où l'on a choisi d'avoir du polymère. Ceci permet d'obtenir une préforme avec la configuration optimale souhaitée, de manière plus sûre et reproductible qu'avec une structure poudrée électrostatiquement après tissage, d'autant plus si la structure ou la préforme a une épaisseur importante ou est en 3D. Un autre avantage résulte de la garantie de la présence de liant aux points d'intersection (ce qu'un poudrage post-tissage ne peut garantir), ce qui contribue aussi à la génération d'une préforme optimale. Le chauffage peut être réalisé par tout moyen de chauffage approprié. Un mode intéressant est un chauffage par infra-rouges. Par définition, ce thermoformage n'est pas accompagné de l'application d'une pression sur la structure fibreuse. On prévoit néanmoins préférentiellement un maintien de la préforme avec un outillage pour brider la structure.

Dans un mode de réalisation, au moins l'un des bords de la structure fibreuse comporte des fils de chaîne et/ou de trame portant du polymère.

Dans un mode de réalisation, au moins l'un des bords de la structure fibreuse comporte des fils de chaîne et/ou de trame portant du polymère et la préforme se caractérise par le fait que ce au moins un bord comporte une soudure formée par chauffage ou découpe et chauffage des fils. Le chauffage peut être réalisé comme précisé plus haut. La découpe plus chauffage peut être réalisée en une étape au moyen d'un outil de découpe chauffé de toute manière connue en soi, par exemple par infra-rouge.

Le polymère au contact de certains fils de chaîne et/ou de trame peut être choisi parmi les polymères (y inclus les copolymères) thermoplastiques et thermodurcissables. Il peut être identique ou différent du polymère qui sera ensuite injecté ou infusé. On peut citer notamment : les polyamides (PA), les copolyamides (CoPA), les polyamides-bloc éther ou ester (PEBAX, PEBA), les polyphtalamides (PPA), les polyesters (notamment polyéthylène téréphtalate -PET-, polybutylène téréphtalate - PBT-), les copolyesters (CoPE), les polyuréthanes thermoplastiques (TPU), les polyacétales (POM, ...), les polyoléfines (notamment PP, HDPE, LDPE, LLDPE), les polyéthersulfones (PES), les polysulfones (PSU,...), les polyphénylènes sulfones (PPSU,...) ; les polymères de la famille des PAEK polyaryléthercétones comprenant notamment les polyétheréthercétones (PEEK) et les polyéthercétonecétone (PEKK) ; le poly(sulfure de phénylène) (PPS), les polyétherimides (PEI), les polyimides thermoplastiques, les polymères à cristaux liquides (LCP), les phénoxys, les copolymères à blocs tels que les copolymères styrène-butadiène-méthylméthacrylate (SBM), les copolymères méthylméthacrylate-acrylate de butyl-méthylméthacrylate (MAM) et leurs mélanges, les époxy, le bismaléimide, les polymères phénoliques.

Plus particulièrement, le polymère est choisi parmi les suivants : PA6, PA12, PA6,6, PA6,10, PA6,12, ou un polyépoxyde avec un point de ramollissement faible, ou un mélange d'au moins deux d'entre eux.

Pour passer de la structure fibreuse à la préforme, la structure fibreuse a subi un thermoformage à une température supérieure au point de ramollissement du polymère, suivi d'un refroidissement, ce grâce à quoi les fils de chaîne et les fils de trame sont liés à leurs intersections par du polymère là où l'un au moins des fils de chaîne et/ou de trame porte du polymère.

Dans un mode de réalisation, les fils de chaîne et/ou les fils de trame engagés dans le tissage portent le polymère dans au moins une partie de la structure fibreuse. En d'autres termes seules une ou plusieurs régions de la structure comprend/comprennent du polymère. Dans ce cas, la préforme comprendra au moins une partie thermoformée et une partie sans polymère, non thermoformée.

Dans un mode de réalisation, on peut prévoir que la totalité des fils de chaîne engagés dans le tissage porte le polymère et que tout ou partie, de préférence la totalité, de la préforme soit thermoformée.

Dans un mode de réalisation, on peut prévoir que la totalité des fils de trame engagés dans le tissage porte le polymère et que tout ou partie, de préférence la totalité, de la préforme soit thermoformée.

Dans un mode de réalisation, on peut aussi prévoir que la totalité des fils de chaîne et la totalité des fils de trame engagés dans le tissage porte le polymère et que tout ou partie, de préférence la totalité, de la préforme soit thermoformée.

Toutefois, grâce à l'utilisation de la technologie Jacquard et notamment de métiers dans lesquels les fils de chaîne sont pilotables individuellement en hauteur, il est possible d'utiliser des fils de chaîne et/ou de trame portant du polymère ou imprégnés de polymère, pour le tissage des parties de la structure qui nécessitent un thermoformage, tandis que les autres parties qui ne le nécessitent pas seront tissées avec des fils de chaîne et/ou de trame sans polymère. On peut réaliser toutes les combinaisons. En outre ce type de métiers permet aussi de faire varier les motifs de tissage et de varier les épaisseurs.

Dans un mode de réalisation, le taux volumique de fibre (TVF) est compris entre environ 30% et environ 80%. Ce taux représente en pourcentage le volume de fibre dans un volume de composite donné. De préférence, ce taux volumique de fibre est mesuré une fois que la pièce composite, comprenant la préforme, est injectée et consolidée. Ce taux tient compte du polymère que portent certains des fils ou l'ensemble des fils, de sorte que l'on peut aussi parler de taux volumique de fibre + polymère. L'utilisation de fils portant du polymère présente l'avantage de permettre d'assurer l'obtention d'un tel taux volumique dans toutes les parties de la préforme (alors qu'un poudrage post-tissage conduira à des irrégularités de taux de polymère et une variabilité du taux volumique), permettant d'assurer de manière optimale la pénétration uniforme à cœur de la préforme, d'un polymère lors d'une étape subséquente, par exemple d'injection ou d'infusion.

Avantageusement, grâce à la teneur réduite et au positionnement astucieux des fils portant du polymère, la préforme présente une perméabilité apte à permettre la pénétration uniforme à cœur de la préforme, d'un polymère lors d'une étape subséquente, par exemple d'injection ou d'infusion.

Dans un mode de réalisation, une pluralité de fils de chaîne et/ou de fils de trame porte un polymère déposé par poudrage, par exemple poudrage gravitationnel ou poudrage électrostatique, extrusion, imprégnation, ou pulvérisation thermique (thermal spray coating). Le dépôt de polymère est réalisé sur les fils, avant tissage. On effectue avantageusement un traitement thermique de fixation du polymère sur le fil, ce qui permet que le polymère reste en place sur le fil pendant le tissage. Le traitement thermique est alors préférentiellement adapté pour que la souplesse du fil soit conservée pour ne pas dégrader l'opération de tissage.

Le nombre de couches de chaînes n'est pas nécessairement identique au nombre de couches de trames (exemple 7 couches chaînes et 8 couches trames). Dans un mode de réalisation, la structure fibreuse et donc la préforme comporte de 3 à 100, de préférence de 3 à 50 couches de fils de chaîne et/ou de fils de trame. Dans un mode de réalisation, la structure et la préforme se caractérisent par une épaisseur maximale d'environ 100 mm. Cette épaisseur peut être notamment comprise entre environ 1 et environ 100 mm, typiquement entre environ 1 et environ 20 mm. Selon l'invention, la préforme peut avoir des parties d'épaisseurs différentes.

La cohésion de la préforme par le polymère peut être obtenue de manière prédéterminée et homogène jusqu'au cœur de cette épaisseur.

Les fils peuvent être en matériau organique ou inorganique. Comme matériau organique, on peut citer par exemple le polypropylène (PP), la viscose, les polyamides, notamment le PA66, les polyéthylènes téréphtalate (PET), les alcools de polyvinyle (PVA), les polyéthylènes (PE), les para-aramides, les poly(p-phénylène-2,6-benzobisoxazole) (PBO). Comme matériau inorganique, on peut citer par exemple l'acier, le carbone, la silice, le verre (S,E,R ...), les oxydes d'alumine.

Dans un mode de réalisation, il s'agit de fils de carbone.

Les filaments constitutifs des fils sont de préférence continus. Les filaments utilisés présentent en général une section droite transversale sensiblement circulaire (filaments ronds) ou, de préférence, sensiblement parallélépipédique ou elliptique (filaments plats).

On peut utiliser tout type de fil de carbone. De préférence, on peut utiliser des fils Haute Résistance (HR) dont le module en traction est compris entre 220 et 241 GPa et dont la contrainte à la rupture en traction est comprise entre 2450 et 4830 MPa, des fils de Module Intermédiaire (IM) dont le module en traction est compris entre 242 et 300 GPa et dont la contrainte à la rupture en traction est comprise entre 3450 et 6400 MPa et des fils Haut Module (HM) dont le module en traction est compris entre 345 et 600 GPa et dont la contrainte à la rupture en traction est comprise entre 3450 et 5520 MPa (voir ASM Handbook, ISBN 0-87170-703-9, ASM International 2001).

Dans un mode de réalisation, la structure fibreuse est formée par tissage Jacquard.

On peut utiliser tout type d'armure, par exemple satin, sergé, taffetas. On peut aussi intégrer une armure interlock.

L'invention permet de produire et de disposer de préformes ayant les caractéristiques avantageuses suivantes
- préformes aux dimensions/géométries exactes prêtes à être disposées dans le moule d'infusion ou d'infiltration de résine liquide ;
- préformes sèches, non tackantes, thermoformables, sans effilochage, dont la découpe est nette aux dimensions utiles pour le moulage ;
- préformes denses en fils avec une résine présente au cœur dont la localisation est maîtrisée ;
- préforme contenant un taux de résine thermoplastique ou thermodure mais toujours thermosensible (qui présente un point de ramolissement).

Ceci offre les avantages suivants au moment du moulage avec infusion de résine, se traduisant par une augmentation de la productivité :
- préforme tissée qui évite l'empilement manuel dans le moule de préformage ;
- préforme tissée qui évite le glissement non contrôlé des plis sous la pression de formage ou d'infusion : maîtrise des caractéristiques mécaniques et du taux de rebut ;
- préforme tissée qui permet d'éviter l'utilisation de patchs de soudure ou la soudure manuelle de plis entre eux ;
- présence de résine à cœur d'une pièce dense en fibres qui permet d'éviter des porosités (<1%) ;
- préforme tissée qui évite l'utilisation d'un gousset de remplissage ;
- préforme tissée qui supprime l'étape manuelle d'imprégnation au pinceau ou au spray notamment de chaque couche unitaire de renfort fibreux, ainsi que les liaisons telles que la couture ou le tricotage, permettant de mieux contrôler la perméabilité transverse du matériau et les microfissurations ;
- préforme tissée qui présente une grande régularité et facilite la mise en oeuvre ;
- la résine sert au maintien de la préforme, ce qui est utile dans les moules à double rayon de courbure ou autres moules de forme complexe.

L'invention va être maintenant décrite plus en détail à l'aide de modes de réalisation pris à titre d'exemple non limitatif et se référant au dessin annexé dans lequel :
La figure 1 est une vue schématique d'une structure tissée selon l'invention destinée à former une préforme 3D.
La figure 2 est une vue schématique du déploiement d'une première structure tissée en une préforme 3D.
La figure 3 est une vue schématique du déploiement d'une deuxième structure tissée en une préforme 3D.
Les figures 4 à 9 sont des vues schématiques de 6 autres exemples de préforme 3D selon l'invention.

Les renforts tissés comptent parmi les plus utilisés dans les applications composites. Ce sont des renforts avec deux orientations privilégiées dans le plan. Ils sont obtenus par l'entrecroisement d'un réseau de fils de chaîne (sens de production) et d'un réseau de fils de trame (sens transverse) sur un métier à tisser. Le réseau de fils de chaîne, conditionné sur une ensouple, forme une nappe. La nappe quitte l'ensouple et passe par des éléments spécifiques (tension, casse fils ...). Pour réaliser cet entrecroisement on vient ouvrir la nappe pour forme la foule. L'ouverture de cette foule se fait en sortant les fils du plan de la nappe par le haut ou par le bas. Une fois la foule constituée, on y insère le fil de trame. Ce fil sera ensuite tassé jusqu'au point de croisure. Après le tassage, une nouvelle foule est créée et emprisonne le fil inséré juste avant.

Les lisses peuvent être animées par une mécanique dite à ratière ou une mécanique « Jacquard ». Dans la mécanique à ratière, des cadres regroupent chacun plusieurs lisses.

Le nombre de cadres permet de faire des armures plus ou moins complexes mais il y aura toujours une répétition du motif. La mécanique « Jacquard » permet de sélectionner chaque lisse de manière indépendante ce qui permet de réaliser des tissus complexes et non réguliers.

L'insertion se fait généralement à l'aide de trois familles d'outils :
- lance : rigide, souple ou télescopique,
- projectile ou navette (réserve de fil embarqué),
- fluide : jet d'air ou jet d'eau (fibres hydrophobes).

Après l'insertion le fil est tassé à l'aide d'un peigne jusqu'au point de croisure. Le peigne peut parfois être profilé pour guider un projectile ou générer un canal pour le fluide. L'étape de tassage contraint le fil en l'écrasant de manière non négligeable.

Il est possible de créer de nombreuses armures qui résultent du choix des foules et insertions successives. Les armures fondamentales sont la toile, le sergé et le satin.

### Exemple 1 :

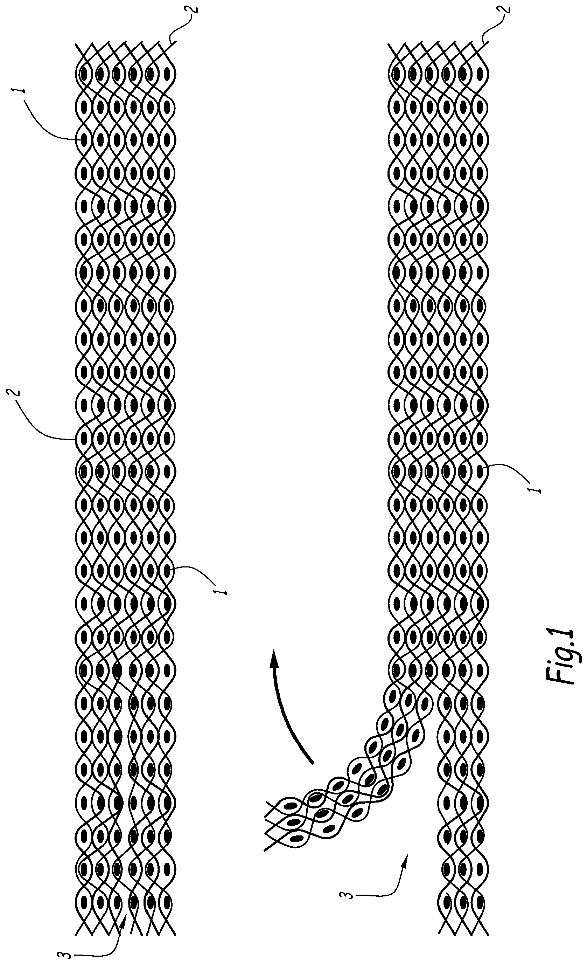

La Figure 1 représente 6 plans horizontaux successifs d'une armure d'une structure fibreuse obtenue par tissage 3D, les fils de trame 1 étant visibles en coupe, les fils de chaîne 2 représentés longitudinalement.

La structure fibreuse (dessin de gauche) comprend 6 couches de fils de trame et 12 couches de fils de chaîne. Partie droite de la figure, toutes les couches de fils de chaîne et de fils de trame sont liées. Partie gauche, sur 7 plans verticaux de fils de trame, les deux couches de fils de trame centraux ne sont pas liées entre elles par des fils de chaîne, ce qu'on appelle ici une zone de déliaison, repérée 3.
Taux volumiques de fibres : 50%.
Titre des fils de carbone en chaîne et trame : 3K
Epaisseur de la structure (et de la préforme) : environ 3 mm.

Les fils de chaîne et les fils de trame sont des fils de carbone imprégnés de résine polyépoxyde, à un taux de 7% de résine en poids par rapport au poids de la structure complète. La structure est placée déployée dans le moule, passée dans un four pour ramollir la résine, puis refroidie donnant la préforme 3D.

On peut voir à la figure 1 le déploiement de la structure, depuis la position initiale à gauche, le déploiement étant esquissé sur la partie droite de la figure (direction de la flèche).

Dans ce même moule ou dans un autre moule, la préforme 3D va ensuite être infiltrée ou infusée avec de la matrice PEEK pour former la pièce finale.

Pour ce exemple 1, on pourrait alternativement prévoir des fils 6K, en fonction de l'application souhaitée.

### Exemple 2 :

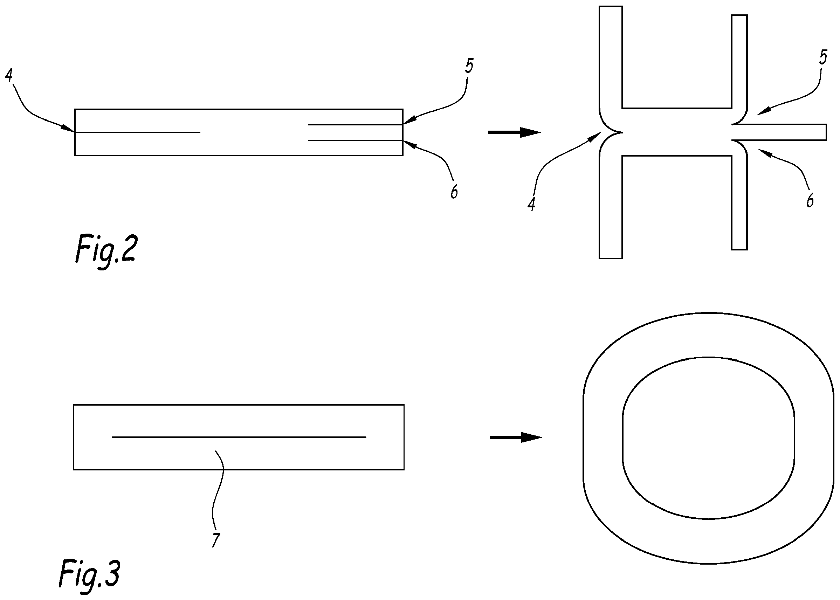

Sur le principe de l'exemple 1, on peut tisser une structure fibreuse selon la Figure 2 (gauche), comprenant, à gauche une première zone de déliaison 4 et à droite, deux zones de déliaison 5 et 6. Cette structure plane (dessin de gauche) peut alors être déployée sous la forme d'une structure déployée 3D comprenant 5 bras (dessin de droite).

Les fils de chaîne et les fils de trame sont des fils de carbone imprégnés de résine polyépoxyde, à un taux de 5% de résine en poids par rapport au poids de la structure complète. La structure est placée déployée dans le moule, passée dans un four pour ramollir la résine, puis refroidie donnant la préforme 3D. Dans ce même moule ou dans un autre moule, la préforme 3D va ensuite être infiltrée ou infusée avec de la matrice PEEK pour former la pièce finale.

### Exemple 3 :

Sur le même principe qu'à l'exemple 1, on peut tisser une structure fibreuse selon la Figure 3 (gauche), comprenant, une zone de déliaison 7 centrale. Cette structure plane (dessin de gauche) peut alors être déployée sous la forme d'une structure déployée 3D creuse ou tubulaire (dessin de droite).

Les fils de chaîne et les fils de trame sont des fils de carbone imprégnés de résine polyamide, à un taux de 10 % de résine en poids par rapport au poids de la structure complète. La structure est placée déployée dans le moule, passée dans un four pour ramollir la résine, puis refroidie donnant la préforme 3D. Dans ce même moule ou dans un autre moule, la préforme 3D va ensuite être infiltrée ou infusée avec de la matrice PEEK pour former la pièce finale.

On peut faire varier la réalisation des déliaisons, par exemple les faire en chaîne, et combiner les deux types dans une même structure.

### Exemple 4 :

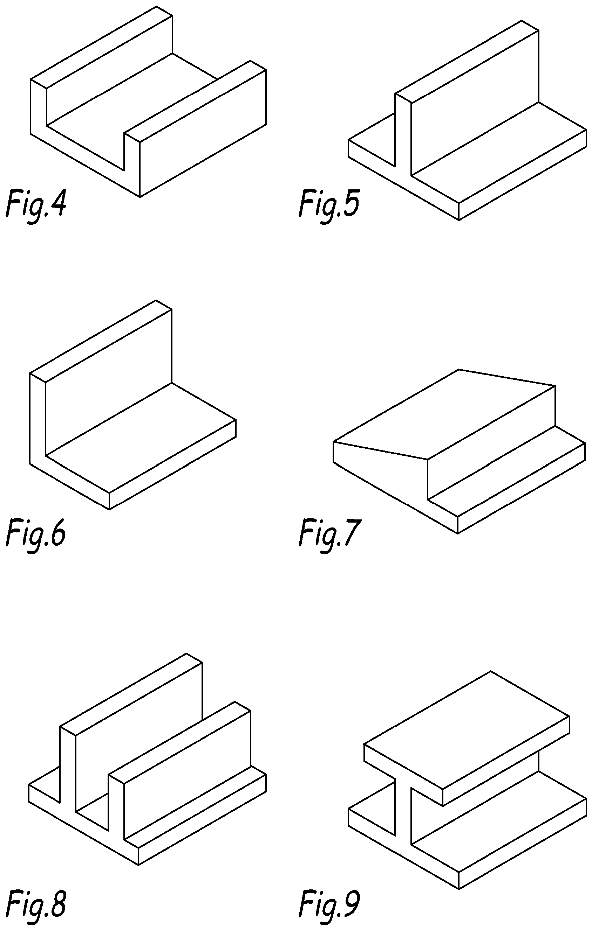

Sur le même principe qu'à l'exemple 1, on peut tisser une structure fibreuse plane. Les fils de chaîne et les fils de trame sont des fils de carbone imprégnés de résine copolymère bloc amide, à un taux de 3 % de résine en poids par rapport au poids de la structure complète. La structure fibreuse est ensuit pliée pour donner la forme de la Figure 4 ou 5. La structure est placée déployée dans le moule, passée dans un four pour ramollir la résine, puis refroidie donnant la préforme 3D. Dans ce même moule ou dans un autre moule, la préforme 3D va ensuite être infiltrée ou infusée avec de la matrice PEEK pour former la pièce finale.

### Exemple 5 :

Sur le même principe qu'à l'exemple 1, on peut tisser une structure fibreuse plane d'épaisseur variable, comme à la Figure 7. Les fils de chaîne et les fils de trame sont des fils de verre imprégnés de résine polyépoxyde, PEI ou polyimide, à un taux de 4 % de résine en poids par rapport au poids de la structure complète. La structure est placée déployée dans le moule, passée dans un four pour ramollir la résine, puis refroidie donnant la préforme 3D. Dans ce même moule ou dans un autre moule, la préforme 3D va ensuite être infiltrée ou infusée avec de la matrice PEEK pour former la pièce finale.

### Exemple 6 :

Sur le même principe qu'à l'exemple 3, on peut tisser une structure fibreuse plane comprenant une ou plusieurs zones de déliaison 7 s'étendant dans l'épaisseur de la structure fibreuse, et permettant, lors du déploiement, de produire les exemples des figures 5, 8 et 9.

Les fils de chaîne et les fils de trame sont des fils de carbone imprégnés de résine polyépoxyde, à un taux conforme à l'invention. La structure est placée déployée dans le moule, passée dans un four pour ramollir la résine, puis refroidie donnant la préforme 3D. Dans ce même moule ou dans un autre moule, la préforme 3D va ensuite être infiltrée ou infusée avec de la matrice PEEK pour former la pièce finale.

## Revendications

1. Préforme en structure fibreuse 3D comprenant au moins 3 couches (1, 2) de fils de trame et/ou de chaîne, la structure étant tissée en une seule pièce par tissage multicouche entre une pluralité de couches de fils de chaîne et une pluralité de couches de fils de trame, **caractérisée en ce que** la totalité ou une fraction déterminée des fils de chaîne et/ou des fils de trame est pré-enduite de polymère thermosensible et comprend une distribution ou répartition de points d'intersection fils de chaîne et fils de trame liés par du polymère, prédéterminée, **en ce que** ce polymère représente une masse inférieure ou égale à environ 10%, de préférence d'environ 1 à environ 7%, mieux de 1 à 5%, en poids par rapport à la masse totale de la préforme, et **en ce que** la préforme comporte au moins une partie thermoformée dans laquelle les fils de chaîne et les fils de trame sont liés à leurs intersections par du polymère là où l'un au moins des fils de chaîne et/ou de trame porte du polymère.

2. Préforme selon la revendication 1, **caractérisée en ce que** la structure fibreuse est obtenue par tissage effectué en utilisant des fils de chaîne et/ou des fils de trame portant en surface le polymère thermosensible, et le passage à la préforme s'est fait par thermoformage à une température supérieure au point de ramollissement du polymère, suivi d'un refroidissement, ce grâce à quoi les fils de chaîne et les fils de trame sont liés à leurs intersection par du polymère là où l'un au moins des fils de chaîne et/ou de trame porte du polymère.

3. Préforme selon la revendication 1 ou 2, **caractérisée en ce que** les fils de chaîne et/ou les fils de trame engagés dans le tissage portent le polymère dans au moins une partie de la structure fibreuse.

4. Préforme selon la revendication 3, **caractérisée en ce qu'**elle comprend au moins une partie thermoformée et une partie sans polymère, non thermoformée.

5. Préforme selon la revendication 1 ou 2, **caractérisée en ce que** la totalité des fils de chaîne et/ou la totalité des fils de trame engagés dans le tissage porte le polymère et la totalité de la préforme est thermoformée.

6. Préforme selon l'une quelconque des revendications précédentes, **caractérisée en ce qu'**une pluralité de fils de chaîne et/ou de fils de trame porte un polymère déposé par poudrage, extrusion, imprégnation, ou pulvérisation thermique.

7. Préforme selon l'une quelconque des revendications précédentes, **caractérisée en ce qu'**elle comporte de 3 à 100, de préférence de 3 à 50 couches de fils de chaîne et/ou de fils de trame.

8. Préforme selon l'une quelconque des revendications précédentes, **caractérisée en ce que** les fils sont des fils de carbone.

9. Préforme selon l'une quelconque des revendications précédentes, **caractérisée en ce qu'**elle comprend une partie creuse ou tubulaire et/ou présente au moins deux plans, par exemple 2, 3, 4, 5, etc. formant un angle quelconque entre eux, par exemple une structure primaire (dans le plan de la structure fibreuse d'origine) à laquelle se raccorde(nt) 1, 2, 3, 4, 5, etc. parties secondaires ou bras.

10. Préforme selon l'une quelconque des revendications précédentes, **caractérisée en ce que** le polymère est choisi parmi les polymères thermoplastiques et thermodurcissables, notamment suivants : les polyamides, les copolyamides (CoPA), les polyamides-bloc éther ou ester (PEBAX, PEBA), les polyphtalamides (PPA), les polyesters (notamment polyéthylène téréphtalate -PET-, polybutylène téréphtalate - PBT-), les copolyesters (CoPE), les polyuréthanes thermoplastiques (TPU), les polyacétales (POM, ...), les polyoléfines (notamment PP, HDPE, LDPE, LLDPE), les polyéthersulfones (PES), les polysulfones (PSU,...), les polyphénylènes sulfones (PPSU,...) ; les polymères de la famille des PAEK polyaryléthercétones comprenant les polyétheréthercétones (PEEK), les polyéthercétonecétone (PEKK), le poly(sulfure de phénylène) (PPS) ; les polyétherimides (PEI), les polyimides thermoplastiques, les polymères à cristaux liquides (LCP), les phénoxys, les copolymères à blocs tels que les copolymères styrène-butadiene-méthylméthacrylate (SBM), les copolymères méthylméthacrylate-acrylate de butyl-méthylméthacrylate (MAM) et leurs mélanges, les époxy, le bismaléimide, les polymères phénoliques.

11. Préforme selon la revendication précédente, **caractérisée en ce que** le polymère est un PA6, PAI2, PA6,6, PA6,10, PA6,12, ou un mélange d'au moins deux d'entre eux.

12. Préforme selon l'une quelconque des revendications précédentes, **caractérisée en ce que** la structure fibreuse est formée par tissage Jacquard.

13. Structure fibreuse 3D tissée comprenant au moins 3 couches de fils de trame et/ou de chaîne, la structure étant tissée en une seule pièce par tissage multicouche entre une pluralité de couches (1, 2) de fils de chaîne et une pluralité de couches de fils de trame, **caractérisée en ce que** le tissage a été effectué en utilisant une pluralité de fils de chaîne et/ou de fils de trame pré-enduits en surface d'un polymère thermosensible, **en ce que** la totalité ou une fraction seulement des fils de chaîne et/ou des fils de trame formant la structure fibreuse sont pré-enduits du polymère thermosensible, **en ce que** les intersections entre fils sont libres, en ce sens que le polymère thermosensible n'a pas été activé, et **en ce que** ce polymère représente une masse inférieure ou égale à 10%, de préférence d'environ 1 à 7%, mieux de 1 à 5%, en poids par rapport à la masse totale de la structure fibreuse.

14. Structure fibreuse selon la revendication 13, **caractérisée en ce qu'**elle comporte au moins une déliaison dans le plan entre deux couches de fils de chaîne ou entre deux couches de fils de trame.

15. Structure fibreuse selon la revendication 14, **caractérisée en ce que** la déliaison s'étend dans le plan de la structure depuis un bord latéral jusqu'au bord latéral opposé, et est interrompue à distance de chacun des deux autres bords latéraux orthogonaux aux précédents ; ou la déliaison s'étend dans le plan de la structure depuis un bord latéral jusqu'au bord latéral opposé, et jusqu'à un bord latéral orthogonal, mais interrompue à distance du bord opposé au précédent.

16. Structure fibreuse selon l'une quelconque des revendications 13 à 15, **caractérisée en ce que** le polymère thermosensible est fixé thermiquement sur les fils pré-enduits avant tissage.

17. Structure fibreuse selon l'une quelconque des revendications 13 à 16, **caractérisée en ce que**, lorsqu'il y a une fraction des fils intégrés à la structure qui sont sans polymère, ceux-ci sont entièrement dépourvus de polymère sur toute leur longueur.

18. Procédé de fabrication d'une préforme selon l'une quelconque des revendications 1 à 11, comprenant la fabrication d'une structure fibreuse par tissage multicouche entre une pluralité de couches (1, 2) de fils de chaîne et une pluralité de couches de fils de trame, le tissage étant effectué en utilisant une pluralité de fils de chaîne et/ou de fils de trame pré-enduits surface d'un polymère thermosensible, ce polymère représentant une masse inférieure ou égale à environ 10%, de préférence d'environ 1 à environ 7%, mieux d'environ 1 à environ 5%, en poids par rapport à la masse totale de la préforme, puis on chauffe la structure fibreuse plane ou déployée à la température de ramollissement du polymère, ou un peu au-dessus, et ensuite, on abaisse la température en dessous de ce point de ramollissement du polymère, ce grâce à quoi l'on obtient la liaison des fils entre eux aux points de contact où ce polymère est présent.

19. Pièce composite comprenant une préforme selon l'une quelconque des revendications 1 à 12.

20. Pièce composite selon la revendication 19, **caractérisée en ce qu'**elle forme un raidisseur ou un cadre.

## Patentansprüche

1. 3D-Vorformling in Faserstruktur, umfassend mindestens drei Lagen (1, 2) von Schuss- und/oder Kettfäden, wobei die Struktur in einem einzigen Stück durch mehrlagiges Weben zwischen einer Vielzahl von Lagen von Kettfäden und einer Vielzahl von Lagen von Schussfäden gewebt ist, **dadurch gekennzeichnet, dass** die Gesamtheit oder ein bestimmter Anteil der Kettfäden und/oder der Schussfäden mit einem wärmeempfindlichen Polymer vorbeschichtet ist und eine Verteilung oder Aufteilung von Kreuzungspunkten von Kettfäden und Schussfäden umfasst, die durch das Polymer verbunden sind, dass dieses Polymer eine Masse von weniger als oder gleich wie etwa 10 %, vorzugsweise von etwa 1 bis etwa 7 %, besser noch von 1 bis 5 %, bezogen auf die Gesamtmasse des Vorformlings, darstellt, und dass der Vorformling mindestens einen thermogeformten Abschnitt umfasst, in dem die Kettfäden und die Schussfäden an ihren Kreuzungspunkten durch das Polymer verbunden sind, wobei mindestens eines von den Kettfäden und/oder Schussfäden Polymer trägt.

2. Vorformling nach Anspruch 1, **dadurch gekennzeichnet, dass** die Faserstruktur durch Weben unter Verwendung von Kettfäden und/oder Schussfäden erlangt wird, die das wärmeempfindliche Polymer auf der Oberfläche tragen, und der Übergang zu dem Vorformling durch Thermoformen bei einer Temperatur oberhalb des Erweichungspunkts des Polymers und anschließendes Abkühlen erfolgt ist, wodurch die Kettfäden und Schussfäden an ihren Kreuzungspunkten, an denen mindestens eines von den Kettfäden und/oder Schussfäden Polymer trägt, durch Polymer verbunden sind.

3. Vorformling nach Anspruch 1 oder 2, **dadurch gekennzeichnet, dass** die Kettfäden und/oder Schussfäden, die beim Weben involviert sind, das Polymer zumindest in einem Abschnitt der Faserstruktur tragen.

4. Vorformling nach Anspruch 3, **dadurch gekennzeichnet, dass** er mindestens einen warmgeformten Abschnitt und einen nicht warmgeformten, polymerfreien Abschnitt umfasst.

5. Vorformling nach Anspruch 1 oder 2, **dadurch gekennzeichnet, dass** alle Kettfäden und/oder alle Schussfäden, die beim Weben involviert sind, das Polymer tragen und der gesamte Vorformling thermisch verformt ist.

6. Vorformling nach einem der vorherigen Ansprüche, **dadurch gekennzeichnet, dass** eine Vielzahl von Kettfäden und/oder Schussfäden ein Polymer tragen, das durch Pulverbeschichtung, Extrusion, Imprägnierung oder thermisches Pulverisieren aufgebracht wird.

7. Vorformling nach einem der vorherigen Ansprüche, **dadurch gekennzeichnet, dass** er 3 bis 100, vorzugsweise 3 bis 50 Lagen von Kettfäden und/oder Schussfäden umfasst.

8. Vorformling nach einem der vorherigen Ansprüche, **dadurch gekennzeichnet, dass** die Fäden Kohlenstofffäden sind.

9. Vorformling nach einem der vorherigen Ansprüche, **dadurch gekennzeichnet, dass** er einen hohlen oder rohrförmigen Abschnitt umfasst und/oder mindestens zwei Ebenen aufweist, beispielsweise 2, 3, 4, 5 usw., die untereinander einen beliebigen Winkel bilden, beispielsweise eine Primärstruktur (in der Ebene der ursprünglichen Faserstruktur), mit der 1, 2, 3, 4, 5 usw. Sekundärabschnitte oder Arme verbunden sind.

10. Vorformling nach einem der vorherigen Ansprüche, **dadurch gekennzeichnet, dass** das Polymer ausgewählt ist aus thermoplastischen und duroplastischen Polymeren, insbesondere aus den folgenden: Polyamide, Copolyamide (CoPA), Ether- oder Esterblockpolyamide (PEBAX, PEBA), Polyphthalamide (PPA), Polyester (insbesondere Polyethylenterephthalat -PET-, Polybutylenterephthalat - PBT-), Copolyester (CoPE), thermoplastische Polyurethane (TPU), Polyacetale (POM, ....), Polyolefine (insbesondere PP, HDPE, LDPE, LLDPE), Polyethersulfone (PES), Polysulfone (PSU, ...), Polyphenylensulfone (PPSU, ...); Polymere der Familie der PAEK Polyaryletherketone, umfassend Polyetheretherketone (PEEK), Polyetherketonketone (PEKK), Poly(phenylensulfid) (PPS); Polyetherimide (PEI), thermoplastische Polyimide, Flüssigkristallpolymere (LCP), Phenoxys, Blockcopolymere, wie z. B. Styrol-Butadien-Methylmethacrylat-Copolymere (SBM), Butylmethylmethacrylat-Methylmethacrylat-Copolymere (MAM) und deren Gemische, Epoxide, Bismaleimid, Phenolpolymere.

11. Vorformling nach dem vorherigen Anspruch, **dadurch gekennzeichnet, dass** das Polymer ein PA6, PAI2, PA6,6, PA6,10, PA6,12 oder ein Gemisch aus mindestens zwei von diesen ist.

12. Vorformling nach einem der vorherigen Ansprüche, **dadurch gekennzeichnet, dass** die Faserstruktur durch Jacquard-Weben gebildet ist.

13. Gewebtes 3D-Faserstruktur, umfassend mindestens 3 Lagen von Schussfäden und/oder Kettfäden, wobei die Struktur in einem Stück durch mehrlagiges Weben zwischen einer Vielzahl von Lagen (1, 2) von Kettfäden und einer Vielzahl von Lagen von Schussfäden gewebt ist, **dadurch gekennzeichnet, dass** das Weben unter Verwendung einer Vielzahl von Kettfäden und/oder Schussfäden durchgeführt wurde, die auf der Oberfläche eines wärmeempfindlichen Polymers vorbeschichtet sind, dass alle oder nur ein Teil der Kettfäden und/oder Schussfäden, die die Faserstruktur bilden, mit dem wärmeempfindlichen Polymer vorbeschichtet sind, dass die Kreuzungspunkte zwischen Fäden dahingehend frei sind, dass das wärmeempfindliche Polymer nicht aktiviert wurde und dass dieses Polymer eine Masse von weniger als oder gleich wie 10 Gewichtsprozent, vorzugsweise von etwa 1 bis 7 Gewichtsprozent, besser noch von 1 bis 5 Gewichtsprozent, bezogen auf die Gesamtmasse der Faserstruktur darstellt.

14. Faserstruktur nach Anspruch 13, **dadurch gekennzeichnet, dass** sie mindestens eine Verknüpfung in der Ebene zwischen zwei Lagen von Kettfäden oder zwischen zwei Lagen von Schussfäden umfasst.

15. Faserstruktur nach Anspruch 14, **dadurch gekennzeichnet, dass** sich die Verknüpfung in der Ebene der Struktur von einem Seitenrand zu dem gegenüberliegenden Seitenrand erstreckt und in einem Abstand von jedem der zwei anderen Seitenränder orthogonal zu der ersteren unterbrochen ist; oder dass sich die Verknüpfung in der Ebene der Struktur von einem Seitenrand zu dem gegenüberliegenden Seitenrand und zu einem orthogonalen Seitenrand erstreckt, aber in einem Abstand von dem Rand gegenüber dem ersteren unterbrochen ist.

16. Faserstruktur nach einem der Ansprüche 13 bis 15, **dadurch gekennzeichnet, dass** das wärmeempfindliche Polymer vor dem Weben thermisch an den vorbeschichteten Fäden fixiert wird.

17. Faserstruktur nach einem der Ansprüche 13 bis 16, **dadurch gekennzeichnet, dass** bei einem Teil der in die Struktur integrierten Fäden, die polymerfrei sind, diese über ihre gesamte Länge vollständig polymerfrei sind.

18. Verfahren zur Herstellung eines Vorformlings nach einem der Ansprüche 1 bis 11, umfassend die Herstellung einer Faserstruktur durch mehrlagiges Weben zwischen einer Vielzahl von Lagen (1, 2) von Kettfäden und einer Vielzahl von Lagen von Schussfäden, wobei das Weben unter Verwendung einer Vielzahl von vorbeschichteten Kettfäden und/oder Schussfäden auf der Oberfläche eines wärmeempfindlichen Polymers durchgeführt wird, wobei dieses Polymer eine Masse von weniger als oder gleich wie etwa 10 % darstellt, vorzugsweise von etwa 1 bis etwa 7 %, noch besser von etwa 1 bis etwa 5 %, bezogen auf die Gesamtmasse des Vorformlings, danach wird die flache oder ausgebreitete Faserstruktur auf den Erweichungspunkt des Polymers oder etwas darüber erhitzt und anschließend wird die Temperatur unter diesen Erweichungspunkt des Polymers abgesenkt, wodurch die Bindung der Fäden an den Kontaktstellen erreicht wird, wo dieses Polymer vorhanden ist.

19. Verbundwerkstück, umfassend einen Vorformling nach einem der Ansprüche 1 bis 12.

20. Verbundwerkstück nach Anspruch 19, **dadurch gekennzeichnet, dass** es eine Versteifung oder einen Rahmen bildet.

## Claims

1. 3D fibrous structure preform comprising at least 3 layers (1, 2) of weft and/or warp yarns, wherein the structure is woven as one part by multilayer weaving between a plurality of layers of warp yarns and a plurality of layers of weft yarns, **characterized in that** the totality or a determined part of the warp yarns and/or the weft yarns is pre-coated with a thermosensitive polymer and comprises a predetermined distribution of intersection points of warp yarn and weft yarn bonded by polymer, and **in that** this polymer represents a weight less than, or equal to, about 10%, preferably from about 1 to about 7%, more preferably from 1 to 5%, by weight based on the total weight of the preform, and **in that** the preform comprises at least one thermoformed portion in which the warp and weft yarns are bonded to their intersections by polymer, where at least one of the warp and/or weft yarns carry polymer.

2. Preform according to claim 1, **characterized in that** the fibrous structure is obtained by weaving using warp yarn and/or weft yarn carrying the thermosensitive polymer on their surface, and the transition to the preform was effected by thermoforming at a temperature above the softening point of the polymer, followed by cooling, whereby the warp and weft yarn are bonded at their intersection by the polymer where the at least one of the warp and/or weft yarns carry polymer.

3. Preform according to claim 1 or 2, **characterized in that** the warp yarn and/or weft yarn engaged in the weave carry the polymer in at least a portion of the fibrous structure.

4. Preform according to claim 3, **characterized in that** it comprises at least a thermoformed portion and portion without polymer and not thermoformed.

5. Preform according to claim 1 or 2, **characterized in that** all of the warp yarns and/or all of the weft yarns engaged in the weave carries the polymer and all of the preform is thermoformed.

6. Preform according to any one of the preceding claims, **characterized in that** a plurality of warp yarns and/or weft yarns carries a polymer deposited by powdering, extrusion, impregnation, or thermal spraying.

7. Preform according to any one of the preceding claims, **characterized in that** it comprises from 3 to 100, preferably from 3 to 50 layers, of warp yarns and/or weft yarns.

8. Preform according to any one of the preceding claims, **characterized in that** the yarns are carbon yarns.

9. Preform according to any one of the preceding claims, **characterized in that** it comprise a hollow or tubular part and/or have at least two planes, for example 2, 3, 4, 5, etc. forming any angle between them, for example a primary structure (in the plane of the original fibrous structure) to which 1, 2, 3, 4, 5, etc. secondary portions or branches are connected.

10. Preform according to any one of the preceding claims, **characterized in that** the polymer is chosen from thermoplastic and thermosetting polymers, including the following: polyamides, copolyamides (CoPA), polyamides-block ether or ester (PEBAX, PEBA), polyphthalamides (PPA), polyesters (especially polyethylene terephthalate -PET-, polybutylene terephthalate -PBT-), copolyesters (CoPE), thermoplastic polyurethanes (TPU), polyacetals (POM, etc.), polyolefins (in particular PP, HDPE, LDPE, LLDPE), polyethersulfones (PES), polysulfones (PSU,...), polyphenyl sulfones (PPSU, etc.); polymers of the family of PAEK polyaryletherketones including polyetheretherketones (PEEK), polyetherketoneketone (PEKK), polyphenylene sulfide (PPS); polyetherimides (PEI), thermoplastic polyimides, liquid crystal polymers (LCP), phenoxys, block copolymers such as styrene-butadiene-methylmethacrylate copolymers (SBM), methylmethacrylate-butyl-methylmethacrylate acrylate copolymers (MAM) and mixtures thereof, epoxies, bismaleimide, phenolic polymers.

11. Preform according to the preceding claim, **characterized in that** the polymer is a PA6, PA12, PA6.6, PA6.10, PA6.12, or a mixture of at least two of them.

12. Preform according to any one of the preceding claims, **characterized in that** the fibrous structure is formed by Jacquard weaving.

13. Woven 3D fibrous structure comprising at least 3 layers of weft and/or warp yarns, wherein the structure is woven as one part by multilayer weaving between a plurality of warp yarn layers and a plurality of weft yarn layers (1, 2), **characterized in that** the weaving was carried out using a plurality of warp yarns and/or weft yarns pre-coated with a thermosensitive polymer on their surface, **in that** the totality or only part of the warp yarns and/or the weft yarns forming the fibrous structure is pre-coated with a thermosensitive polymer, **in that** the intersections between yarns are free, in the sense that the thermosensitive polymer has not been activated, and **in that** this polymer represents a weight less than or equal to 10 %, preferably about 1 to 7%, more preferably 1 to 5%, by weight based on the total weight of the fibrous structure.

14. Fibrous structure according to claim 13, **characterized in that** it comprises at least one debonding in the plane between two layers of warp yarns or between two layers of weft yarns.

15. Fibrous structure according to claim 14, **characterized in that** the debonding extends in the plane of the structure from one lateral edge to the opposite lateral edge, and is interrupted at a distance from each of the two other lateral edges orthogonal to the previous ones; or the debonding extends in the plane of the structure from one lateral edge to the opposite lateral edge and to an orthogonal lateral edge, but is interrupted at a distance from the edge opposite to the previous edge.

16. Fibrous structure according to any one of claims 13 to 15, **characterized in that** the thermosentitive polymer is fixed by heat treatment on the pre-coated yarns before weaving.

17. Fibrous structure according to any one of claims 13 to 16, **characterized in that**, when there is a part of the yarns integrated in the structure that are without polymer, these yarns are entirely devoid of polymer over their whole length.

18. Method of manufacturing a preform according to any one of the claims 1 to 11, comprising producing a fibrous structure by multilayer weaving between a plurality of warp yarn layers and a plurality of weft yarn layers (1, 2), wherein the weaving is carried out by using a plurality of warp yarns and/or weft yarns pre-coated witharrying a thermosensitive polymer on their surface, wherein this polymer represents a weight of less than, or equal to, about 10%, preferably about 1 at about 7%, more preferably from about 1 to about 5%, by weight based on the total weight of the preform, and then the flat or expanded fibrous structure is heated to the softening temperature of the polymer, or a little above this, and then the temperature is lowered below this softening point of the polymer, whereby the yarns are bonded together at the points of contact where this polymer is present.

19. Composite part comprising a preform according to any one of the claims 1 to 12.

20. Composite part according to claim 19, **characterized in that** it forms a a stiffener or frame.
